# EUROPÄISCHE PATENTSCHRIFT

(11) **EP 0 841 219 B1**
(45) Veröffentlichungstag und Bekanntmachung des Hinweises auf die Patenterteilung: **20.03.2002**
(21) Anmeldenummer: 97117601.1
(22) Anmeldetag: 10.10.1997
(51) Int. Cl.: B60R 16/02

(54) **Schaltungsanordnung zur Erfassung der Position eines beweglichen Elements in einem Kraftfahrzeug**
Control device for determining the position of a movable element in a vehicle
Dispositif de commande pour déterminer la position d'un élément mobile dans un véhicule

(30) Priorität: 12.10.1996 DE 19642174
(43) Veröffentlichungstag der Anmeldung: 13.05.1998
(73) Patentinhaber: Hella KG Hueck & Co., 59552 Lippstadt (DE)
(72) Erfinder: Krüger, Dietmar, 59558 Lippstadt (DE); Overmann, Peter, 59557 Lippstadt (DE)

(56) Entgegenhaltungen:
- US-A- 5 065 721
- US-A- 5 107 427
- US-A- 5 260 877

## Beschreibung

Die Erfindung betrifft eine Schaltungsanordnung zur Erfassung der Position eines beweglichen Elementes in einem Kraftfahrzeug, bestehend aus zwei Sensoren, deren Signalleitungen mit einer Auswerteeinheit verbunden sind, bei der die Auswerteeinheit eine Funktionsprüfung der Sensoren anhand der ihr auf den Signalleitungen zugeführten Sensorsignale ausführt.

Besonders bei der Positionserfassung sicherheitskritischer Elemente in einem Kraftfahrzeug kommen bevorzugt Schaltungsanordnungen zur Anwendung, die die Position dieser Elemente, z. B. eines Fahrpedales oder einer motorisch betätigten Drosselklappe, durch mehrere Sensoren redundant erfassen. Durch Vergleich bzw. Konsistenzprüfung mehrerer Sensorsignale soll die zugehörige Auswerteeinheit Fehler in der Sensorik erkennen.

Aus der EP 0446453 A1 ist eine Schaltungsanordnung gemäß dem Oberbegriff von Anspruch 1 zur elektrischen Steuerung und/oder Regelung einer Brennkraftmaschine eines Kraftfahrzeugs bekannt, bei der die Sensoren als Doppelpotentiometer ausgebildet sind. Um auch Kurz- bzw. Nebenschlüsse zwischen den Potentiometerschleifern (oder den Signalleitungen) zu erkennen, werden hier Potentiometer mit unterschiedlichen Widerstandswerten vorgesehen, wobei sich zudem die von den beiden Potentiometern erzeugten Signalgrößen bei einer Positionsveränderung des sensierten Elementes gegensinnig verändern.

Eine derartige Sensorschaltung weist aber einige Nachteile auf: bei elektrisch gegenläufigen Widerstandsbahnen mit gleichem Widerstandswert tritt im Fehlerfall eines Nebenschlusses zwischen den Schleifem ein Wert auf, der einer mittleren Auslenkung entspricht. Selbst durch die Wahl unterschiedlicher Widerstandswerte kann nur das Niveau der falschen Auslenkungsanzeige verschoben werden.

Der eigentliche Fehler wird nicht erkannt, und der Bediener wird nur durch die stark eingeschränkte Verfügbarkeit der Brennkraftmaschine auf den Fehler aufmerksam. Dadurch daß der Fehler nun nicht eindeutig erkannt wird, ist die Diagnosefähigkeit des Systems stark eingeschränkt.

Bei Sensoren mit identischen Kennlinien wird die Verfügbarkeit durch einen Kurzschluß zwar nicht beeinflußt, bedeutet aber einen Verlust der Redundanz.

Es ist daher die Aufgabe der Erfindung, eine Schaltungsanordnung zu schaffen, bei der Fehler, die zu einer gegenseitigen Beeinflussung von Sensorsignalen führen, auf einfache und eindeutige Weise erkannt werden können.

Diese Aufgabe wird erfindungsgemäß dadurch gelöst, daß auf eine Signalleitung zusätzlich ein periodisches Signal aufgeschaltet ist und daß die Auswerteeinheit das Auftreten eines periodischen Signals auf beiden Signalleitungen prüft.

Bei der erfindungsgemäßen Schaltungsanordnung prüft somit die Auswerteeinheit, ob das auf die eine Signalleitung aufgeschaltete periodische Signal auch auf der Signalleitung des anderen Sensors vorliegt. Ist dies der Fall, wird ein Fehler erkannt, der eine dem Fehler angepaßte Reaktion des Systems bewirken kann, z. B. durch Warnung an den Bediener, durch eine Diagnosebotschaft an den Service oder auch durch ein auf den Fehler abgestimmtes Notlaufkonzept.

Die erfindungsgemäße Schaltungsanordnung erkennt dabei sowohl Kurz- als auch Nebenschlüsse, und zwar sowohl in den Signalleitungen wie auch in den Sensorausgangsanschlüssen (wie z. B. Potentiometerschleiferanschlüsse).

Besonders vorteilhaft ist, daß zur Realisierung der erfindungsgemäßen Merkmale nur ein äußerst geringer Hardware-Aufwand erforderlich ist. In dem nachfolgend beschriebenen Ausführungsbeispiel reichen hierzu beispielsweise bereits zwei Widerstände, ein Transistor und ein freier Port an der Auswerteeinheit aus.

Ebenfalls vorteilhaft ist, daß die korrekte Funktion des Prüfmechanismus auch im Nichtfehlerfall ohne zusätzlichen Hardware-Aufwand jederzeit geprüft werden kann. Durch einfache Auswertung der Signale auf der mit dem periodischen Signal beaufschlagten Signalleitung kann die Auswerteeinheit die korrekte Funktion jederzeit prüfen.

Weitere vorteilhafte Ausgestaltungen und Weiterbildungen der erfindungsgemäßen Schaltungsanordnung gehen aus den Unteransprüchen hervor. So sind zwei redundant messende Sensoren besonders einfach und kostengünstig durch ein Doppelpotentiometer zu realisieren, insbesondere, da die hierzu gehörenden Einzelpotentiometer Gleichspannungssignale liefern, die zudem im allgemeinen linear von der Positionierung des überwachten Elementes abhängen. Dies schließt jedoch keineswegs die Verwendung von Sensoren aus, die auf anderen Meßprinzipien beruhen, z. B. kapazitive oder induktive.

Vorteilhaft ist auch, als periodisches Signal ein Rechtecksignal vorzusehen, das z. B. leicht durch einen digitalen Schaltkreis erzeugbar ist. Besonders vorteilhaft ist es, wenn die Auswerteeinheit selbst das periodische Signal erzeugt, was z. B. leicht dadurch ausführbar ist, daß die Auswerteeinheit als Microcontroller ausgebildet ist, welcher über einen Port ein periodisches Rechtecksignal ausgibt.

Eine alternative und ebenfalls vorteilhafte Möglichkeit ist es, bereits anderweitig erzeugte periodische Signale auf die Signalleitung aufzuschalten. Hierdurch kann der zur Signalausgabe benötigte Port an der Auswerteeinheit eingespart und die Auswerteeinheit von der Erzeugung des periodischen Signals entlastet werden.

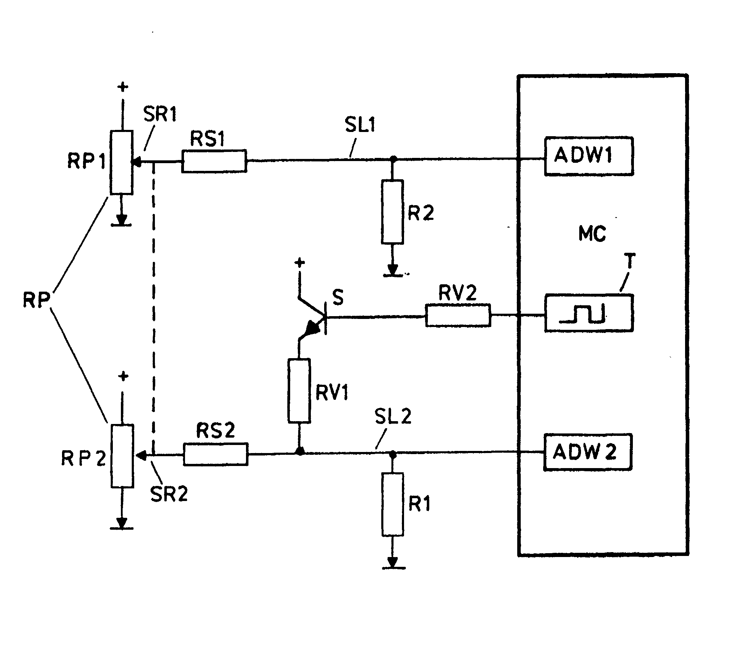

Im folgenden soll die erfindungsgemäße Schaltungsanordnung anhand eines in der einzigen Figur dargestellten Ausführungsbeispieles näher erläutert werden.

Die Sensorschaltung besteht aus zwei als Doppelpotentiometer (RP) ausgebildeten Sensoren (RP1, RP2), dessen Schleiferwelle mit einem nicht dargestellten beweglichen Element eines Kraftfahrzeuges, z. B. dem Betätigungselement eines Fahrpedalgebers, verbunden ist.

Die beiden zum Doppelpotentiometer (RP) gehörenden Einzelpotentiometer (RP1, RP2) sind mit ihren Festanschlüssen jeweils mit dem Plus-Anschluß (+) und dem Masseanschluß einer Spannungsquelle verbunden. Vorteilhaft ist, daß es für die Funktion der erfindungsgemäßen Schaltung unerheblich ist, ob die Einzelpotentiometer (RP1, RP2) so verschaltet sind, daß sich ihre Signale bei Betätigung der Potentiometerwelle gleich- oder gegensinnig ändern. Ebenfalls unerheblich ist, ob die Einzelpotentiometer (RP1, RP2) gleiche oder unterschiedliche Widerstandswerte aufweisen. Somit können diese Sensorparameter optimal an den jeweiligen Anwendungsfall angepaßt werden.

Die Schleiferanschlüsse (SR1, SR2) sind über jeweils einen Signalleitungswiderstand (RS1, RS2) und eine Signalleitung mit einem Analog-Digital-Wandler (ADW1, ADW2) verbunden. Diese Analog-Digital-Wandler (ADW1, ADW2) sind Teil einer Auswerteeinheit (MC), welche die Sensorsignale in digitale Größen wandeln und entsprechend der jeweiligen Anwendung weiter auswerten.

Diese Auswerteeinheit (MC) ist hier zweckmäßigerweise als Microcontroller ausgeführt, wobei die Analog-Digital-Wandler (ADW1, ADW2) integrierte Bestandteile des Microcontrollers sind.

Die mit den Signalleitungen (SL1, SL2) verbundenen und jeweils nach Masse geführten Widerstände (R1, R2) sorgen für definierte Eingangspegel der Analog-Digital-Wandler (ADW1, ADW2) im Falle einer offenen Leitung zum Sensor.

Wesentlich ist, daß auf eine der Signalleitungen (SL2) zusätzlich zu dem vom Sensor (RP2) erzeugten Sensorsignal ein periodisches Signal aufgeschaltet wird.

Hierzu gibt die Auswerteeinheit (MC) über einen Port periodische Impulse aus bzw. weist einen Taktgeber (T) auf, welcher über den Vorwiderstand (RV2), einen elektronischen Schalter (S) und den weiteren Vorwiderstand (RV1) Rechtecksignale auf die Signalleitung (SL2) gibt. Diese periodischen Signale ermöglichen es auf einfache und eindeutige Weise, Fehler in den Signalzuleitungen, wie Kurz- oder Nebenschlüsse zwischen den Schleifenanschlüssen oder den Signalleitungen zu erkennen. Unter Nebenschlüssen seien hier Verbindungen mit einem endlichen Übergangswiderstand bezeichnet, im Gegensatz zu Kurzschlüssen, bei denen der Übergangswiderstand gegen Null geht.

Diese Erkennung erfolgt dadurch, daß die Auswerteeinheit (MC) auch von der nicht mit dem periodischen Signal beaufschlagten Signalleitung (SL1) einen periodischen Anteil registriert, welcher mit dem periodischen Signalanteil auf der mit dem periodischen Signal beaufschlagten Signalleitung (SL2) zeitlich korreliert.

Je nach Größe des periodischen Anteils des Signales auf der nicht beaufschlagten Signalleitung (SL1) können Kurz- oder auch Nebenschlüsse unterschieden werden. Auf jeden Fall wird so ein Verbindungsfehler zwischen den beiden Signalleitungen eindeutig erkannt, so daß die Auswerteeinheit eine entsprechende Reaktion, z. B. die Ausgabe eines Warn- oder Diagnosesignals oder die Ausführung eines Notlaufprogramms, veranlassen kann.

Die Auswerteeinheit wird zweckmäßigerweise auch im Nichtfehlerfall das Vorliegen des periodischen Signals auf der beaufschlagten Signalleitung (SL2) ständig überwachen.

Darüber hinaus wird die Auswerteeinheit (MC) natürlich durch Auswertung des Sensorsignals des ersten Einzelpotentiometers (RP1) die eigentliche Meßgröße bestimmen sowie durch zusätzliches Ausfiltem des periodischen Anteiles auf der Signalleitung (SL2) zudem einen Vergleich oder eine Konsistenzüberprüfung der Daten beider Sensoren (RP1, RP2) vornehmen und so zusätzlich die Funktionsfähigkeit beider Sensoren (RP1, RP2) prüfen.

Wie dem Ausführungsbeispiel zu entnehmen ist, ist der schaltungsmäßige Aufwand zur Beaufschlagung einer Signalleitung mit einem periodischen Prüfsignal äußerst einfach.

In einer alternativen und hier nicht dargestellten Ausführungsform kann zudem noch auf den Taktgeber (T) bzw. auf die Belegung eines Ports der Auswerteeinheit (MC) verzichtet werden, wenn ein eventuell anderweitig bereits vorhandenes periodisches Taktsignal, z. B. ein Clocksignal oder ein periodisches Signal einer Watch-Dog-Schaltung etc., zur Beaufschlagung der Signalleitung (SL2) verwendet wird. Dieses ist möglich, da die erfindungsgemäße Fehlererkennung ja auf einem Vergleich der Signale auf den beiden Signalleitungen (SL1, SL2) beruht.

Das periodische Signal muß nur in jedem Fall ausreichend schnell und flankensteil sein, um von der Auswerteeinheit von einer Signaländerung aufgrund einer schnellen Sensorbetätigung in jedem Fall unterscheidbar zu sein.

### Bezugszeichenliste

Schaltungsanordnung zur Erfassung der Position eines beweglichen Elementes in einem Kraftfahrzeug
- ADW1, ADW2: Analog-Digital-Wandler
- MC: Auswerteeinheit (Microcontroller)
- R1, R2: Widerstand
- RP: Doppelpotentiometer
- RP1, RP2: Sensoren (Einzelpotentiometer)
- RS1, RS2: Signalleitungswiderstand
- RV1, RV2: Vorwiderstand
- S: elektronischer Schalter
- SL1, SL2: Signalleitung
- SR1, SR2: Schleiferanschluß
- T: Taktgeber
- +: Plus-Anschluß

## Patentansprüche

1. Schaltungsanordnung zur Erfassung der Position eines beweglichen Elementes in einem Kraftfahrzeug, bestehend aus zwei Sensoren (RP1, RP2), deren Signalleitungen (SL1, SL2) mit einer Auswerteeinheit (MC) verbunden sind, bei der die Auswerteeinheit (MC) eine Funktionsprüfung der Sensoren (RP1, RP2) anhand der ihr auf den Signalleitungen (SL1, SL2) zugeführten Sensorsignale ausführt, **dadurch gekennzeichnet, daß** auf eine Signalleitung (SL2) zusätzlich ein periodisches Signal aufgeschaltet ist und daß die Auswerteeinheit (MC) das Auftreten eines periodischen Signals auf beiden Signalleitungen (SL1, SL2) prüft.

2. Schaltungsanordnung nach Anspruch 1, **dadurch gekennzeichnet, daß** die Auswerteeinheit (MC) beim Auftreten eines periodischen Signals auf beiden Signalleitungen (SL1, SL2) deren zeitliche Korrelation prüft.

3. Schaltungsanordnung nach Anspruch 1, **dadurch gekennzeichnet, daß** die Auswerteeinheit (MC) beim Auftreten eines periodischen Signals auf beiden Signalleitungen (SL1, SL2) das Verhältnis der Signalpegel auswertet.

4. Schaltungsanordnung nach Anspruch 1, **dadurch gekennzeichnet, daß** die zwei Sensoren (RP1, RP2) als Doppelpotentiometer (RP) ausgeführt sind.

5. Schaltungsanordnung nach Anspruch 1, **dadurch gekennzeichnet, daß** das periodische Signal ein Rechtecksignal ist.

6. Schaltungsanordnung nach Anspruch 1 oder 5, **dadurch gekennzeichnet, daß** die Auswerteeinheit (MC) ein Microcontroller ist und daß das periodische Signal durch die Auswerteeinheit (MC) erzeugt wird.

7. Schaltungsanordnung nach Anspruch 1, **dadurch gekennzeichnet, daß** die Sensoren (RP1, RP2) die Position eines Fahrpedales oder einer motorisch betätigten Drosselklappe erfassen.

## Claims

1. Circuit arrangement for detecting the position of a moving element in a motor vehicle, comprising two sensors (RP1, RP2) whose signal lines (SL1, SL2) are connected to an evaluation unit (MC), wherein the evaluation unit (MC) performs a functional test on the sencors (RP1, RP2) on the basis of the sensor signals fed to it on the signal lines (SL1, SL2), **characterized in that** a periodic signal is additionally fed to one signal line (SL2) and **in that** the evaluation unit (MC) tests for the occurrence of a periodic signal on both signal lines (SL1, SL2).

2. Circuit arrangement according to Claim 1, **characterized in that** when a periodic signal occurs on both signal lines (SL1, SL2) the evaluation unit (MC) checks the signal's correlation in time.

3. Circuit arrangement according to Claim 1, **characterized in that** when a periodic signal occurs on both signal lines (SL1, SL2) the evaluation unit (MC) evaluates the signal level ratio.

4. Circuit arrangement according to Claim 1, **characterized in that** the two sensors (RP1, RP2) are constructed as dual-operated potentiometers (RP).

5. Circuit arrangement according to Claim 1, **characterized in that** the periodic signal is a square-wave signal.

6. Circuit arrangement according to Claim 1 or Claim 5, **characterized in that** the evaluation unit (MC) is a microcontroller and **in that** the periodic signal is generated by the evaluation unit (MC).

7. Circuit arrangement according to Claim 1, **characterized in that** the sensors (RP1, RP2) detect the position of an accelerator pedal or motor-operated throttle.

## Revendications

1. Dispositif de circuit en vue de la détection de la position d'un élément mobile dans un véhicule automobile, se composant de deux capteurs (RP1, RP2), dont les lignes de signal (SL1, SL2) sont reliées à une unité d'évaluation (MC), dans lequel l'unité d'évaluation (MC) effectue une vérification fonctionnelle des capteurs (RP1, RP2) à l'aide des signaux de capteur qui lui sont appliqués sur les lignes de signal (SL1, SL2), **caractérisé en ce que** sur une ligne de signal (SL2) est en outre appliqué un signal périodique et **en ce que** l'unité d'évaluation (MC) vérifie l'apparition d'un signal périodique sur les deux lignes de signal (SL1, SL2).

2. Dispositif de circuit selon la revendication 1, **caractérisé en ce que** l'unité d'évaluation (MC) lors de l'apparition d'un signal périodique sur les lignes de signal (SL1, SL2) vérifie la corrélation temporelle de celui-ci.

3. Dispositif de circuit selon la revendication 1, **caractérisé en ce que** l'unité d'évaluation (MC), lors de l'apparition d'un signal périodique sur les deux lignes de signal (SL1, SL2), évalue le rapport du niveau des signaux.

4. Dispositif de circuit selon la revendication 1, **caractérisé en ce que** les deux capteurs (RP1, RP2) sont réalisés sous la forme de potentiomètres doubles (RP).

5. Dispositif de circuit selon la revendication 1, **caractérisé en ce que** le signal périodique est un signal rectangulaire.

6. Dispositif de circuit selon la revendication 1 ou 5, **caractérisé en ce que** l'unité d'évaluation (MC) est un microcontrôleur et **en ce que** le signal périodique est généré par l'unité d'évaluation (MC).

7. Dispositif de circuit selon la revendication (1), **caractérisé en ce que** les capteurs (RP1, RP2) détectent la position d'une pédale d'accélération ou d'un papillon actionné par le moteur.
